# EUROPÄISCHE PATENTSCHRIFT

(11) **EP 2 779 192 B1**
(45) Veröffentlichungstag und Bekanntmachung des Hinweises auf die Patenterteilung: **04.05.2016**
(21) Anmeldenummer: 14150582.6
(22) Anmeldetag: 09.01.2014
(51) Int. Cl.: H01H 9/02, H01H 9/18

(54) **Elektrisches/elektronisches Installationsgerät**
Electric/electronic installation device
Appareil d'installation électrique/électronique

(30) Priorität: 14.03.2013 DE 102013102598
(43) Veröffentlichungstag der Anmeldung: 17.09.2014
(73) Patentinhaber: Albrecht Jung GmbH & Co. KG, 58579 Schalksmühle (DE)
(72) Erfinder: Ullrich, Konrad, 58339 Breckerfeld (DE); Gebhardt, Marc, 58579 Schalksmühle (DE)

(56) Entgegenhaltungen:
- EP-A2- 2 043 123
- DE-B3-102007 045 866
- DE-B4-102004 043 649
- DE-U1-202006 010 269

## Beschreibung

Die vorliegende Erfindung geht von einem gemäß Oberbegriff des Hauptanspruches konzipierten elektrischen/elektronischen Installationsgerätes aus.

Derartige elektrische/elektronische Installationsgeräte sind in der Regel dafür vorgesehen, eine Vielzahl von, in Gebäuden installierte Aktoren (Jalousieantriebe, Beleuchtungseinrichtungen, Fühler, Wächter usw.) bedarfsgerecht zu beeinflussen. Zu diesem Zweck sind die unterschiedlichsten Installationsgeräte, wie Schalter, Taster, Dimmer usw. bekannt geworden, die auch selber mit einer Beleuchtung versehen sein können.

Durch die DE 10 2004 043 649 B4 ist ein dem Oberbegriff des Hauptanspruch entsprechendes elektrisches/elektronisches Installationsgerät für die Gebäudesystemtechnik bekannt geworden. Bei diesem elektrischen/elektronischen Installationsgerät für die Gebäudesystemtechnik ist ein, in eine Installationsdose hineinragendes erstes Funktionsmodul vorgesehen, welches mehrere Funktionselemente aufweist. Ein zweites Funktionsmodul ist unter Zwischenschaltung eines Abdeckrahmens mit dem ersten Funktionsmodul verbindbar. Das zweite Funktionsmodul ist mit einer elektrischen Leiterplatte versehen, die einerseits zumindest mehrere zur Verbindung mit dem ersten Funktionsmodul vorgesehene Kontaktstifte aufweist und die andererseits mit mehreren LED-Bausteinen bestückt ist. Andererseits ist der elektrischen Leiterplatte eine, aus zumindest zwei verschiedenartig ausgebildeten Lichtleitkörpern bestehende Lichtleiteranordnung zugeordnet, in welche das von den LED-Bausteinen abgegebene Licht eingekoppelt wird.

Des Weiteren ist durch die EP 2 043 123 A2 ein elektrisches/elektronisches Installationsgerät für die Gebäudesystemtechnik bekannt geworden, bei dem ein, in eine Installationsdose hineinragendes Funktionsmodul vorgesehen ist, welches mehrere Funktionselemente aufweist. Das Funktionsmodul kann mit einer als elektrische Leiterplatte ausgebildeten Verlängerung versehen sein, welche mit mehreren Schaltelementen und mehreren Lichtleitelementen bestückt ist. Zur Realisierung der Schaltelemente ist vorgesehen, auf der Leiterplatte eine Domschaltmatte anzuordnen.

Ausgehend von derart ausgebildeten elektrischen/elektronischen Installationsgeräten liegt der vorliegenden Erfindung die Aufgabe zugrunde, ein Installationsgerät zu schaffen, welches auf kostengünstige Art und Weise bei besonders kompaktem Aufbau eine bedarfsgerechte Ausleuchtung über eine, aus zumindest zwei verschiedenartig ausgebildeten Lichtleitkörpern bestehende Lichtleiteranordnung ermöglicht. Dabei soll das elektrische/elektronische Installationsgerät insbesondere einen besonders homogen ausgeleuchteten, zentral angeordneten, sowie flächig ausgeführten ersten Lichtauskoppelbereich und zumindest einen linienförmig ausgeführten zweiten Lichtauskoppelbereich aufweisen. Vorzugsweise sind zwei linienförmig ausgeführte zweite Lichtauskoppelbereiche vorzusehen, die den flächig ausgeführten ersten Lichtauskoppelbereich zwischen sich aufnehmen.

Erfindungsgemäß wird diese Aufgabe durch die im Hauptanspruch angegebenen Merkmale gelöst.

Bei einer solchen Ausbildung ist besonders vorteilhaft, dass durch die Lichtleiteranordnung auf besonders einfache Art und Weise sowohl eine Hintergrundbeleuchtung bzw. Such-/Ambientebeleuchtung als auch eine Funktionsbeleuchtung realisiert ist. Weiterhin ist besonders vorteilhaft, dass durch die Ausbildung der Domschaltmatte sowohl Lichtabschottungseffekte zur Verhinderung von Streulicht als auch Lichtreflektionseffekte zur Realisierung einer optimierten Lichtausnutzung auf besonders einfache Art und Weise verwirklicht sind.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert, dabei zeigt:
Fig. 1: prinziphaft eine Explosionsdarstellung, wobei das Funktionsmodul in Zuordnung zur Installationsdose mit Abdeckrahmen und Tragring dargestellt ist;
Fig. 2: prinziphaft eine Explosionsdarstellung des Funktionsmoduls;
Fig. 3: prinziphaft die elektrische Leiterplatte, die Domschaltmatte und die Lichtleiteranordnung als Zusammenbau in räumlicher Darstellung.

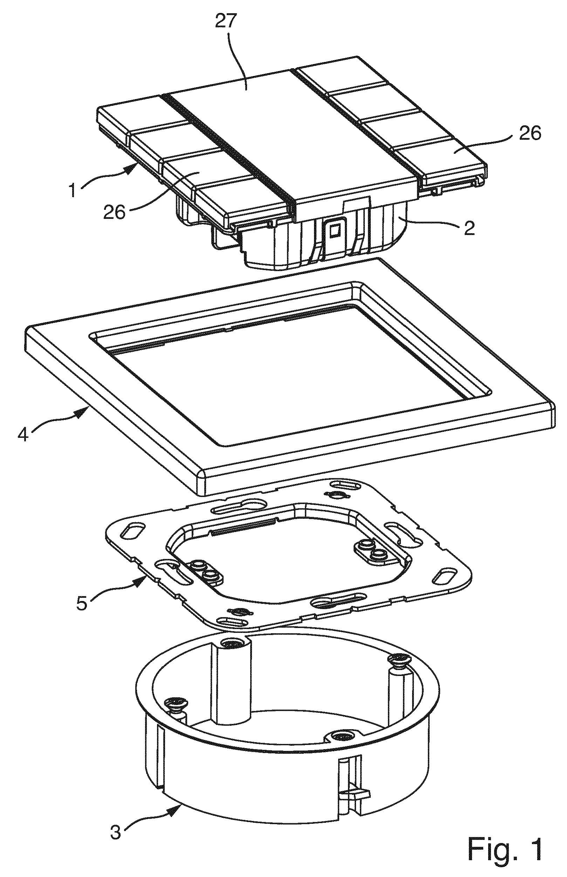

Wie insbesondere aus Figur 1 hervorgeht, besteht ein solches elektrisches/elektronisches Installationsgerät für die Gebäudesystemtechnik hauptsächlich aus einem Funktionsmodul 1, welches mit seinem Sockelteil 2 zur Installation in eine Installationsdose 3 hineinragt. Das Funktionsmodul 1 weist mehrere Funktionselemente auf und wird unter Zwischenschaltung eines Abdeckrahmens 4 und eines Tragringes 5, wie bei solchen Installationen üblich in, bzw. an der Installationsdose 3 befestigt. Mit der Unterseite seines Bedienbereiches kommt das Funktionsmodul 1, wie üblich, zum Beispiel auf der Wand zu liegen, in welcher sich die Installationsdose 3 befindet.

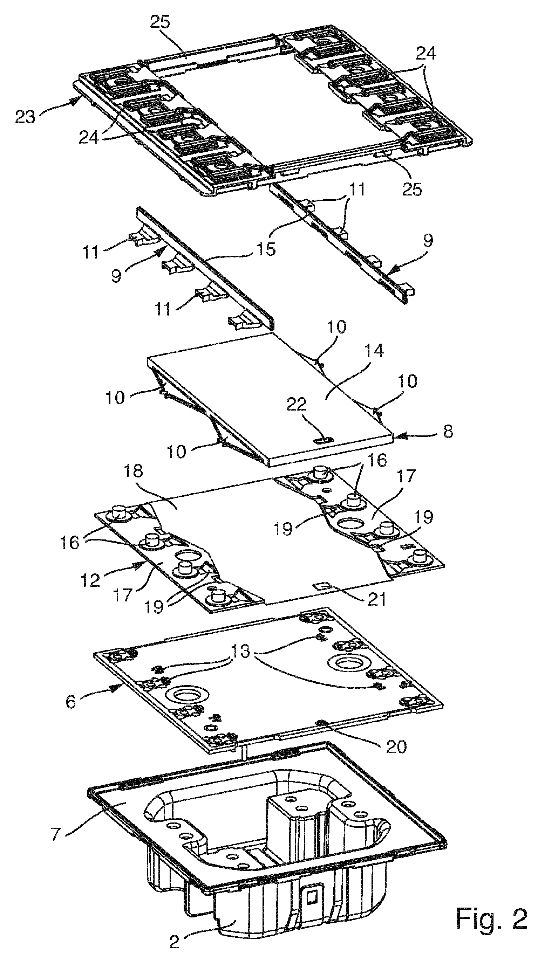

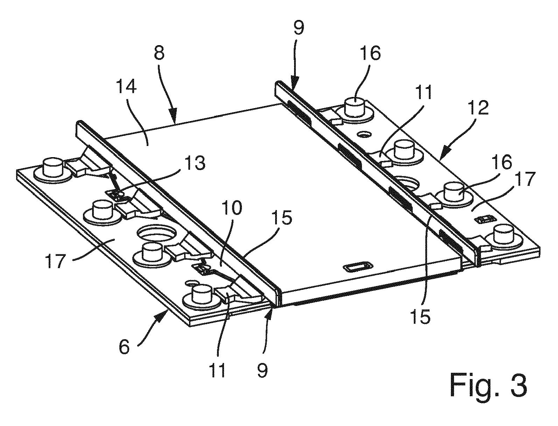

Wie insbesondere aus Figur 2 und Figur 3 hervorgeht, ist das Funktionsmodul 1 mit einer elektrischen Leiterplatte 6 versehen, die rückseitig, also der Installationsdose 3 zugewandt, mehrere zur Verbindung mit Anschlusselementen vorgesehene Kontaktstifte aufweist und die zudem rückseitig mit mehreren, zur Funktion notwendigen, elektrischen/elektronischen Bauteilen (Funktionselemente) bestückt ist. Der Einfachheit halber sind weder die Kontaktstifte, noch die elektrischen/elektronischen Bauteile dargestellt. Rückseitig kommt die elektrische Leiterplatte 6 auf einem kragenförmigen Ansatz 7 des Sockelteils 2 zu liegen. Zudem ist der elektrischen Leiterplatte 6 vorderseitig, also dem Benutzer zugewandt, eine aus mehreren verschiedenartig ausgebildeten Lichtleitkörpern 8, 9 bestehende Lichtleiteranordnung zugeordnet, in welche das von zugeordneten LED-Bausteinen 13 abgegebene Licht eingekoppelt wird. Zu diesem Zweck ist die elektrische Leiterplatte 6 auf ihrer Vorderseite mit zwölf LED-Bausteinen 13 bestückt. Der erste Lichtleitkörper 8 der Lichtleiteranordnung ist plattenförmig ausgebildet und einstückig an zwei gegenüberliegenden Kantenbereichen mit jeweils zwei, im Wesentlichen dreieckförmig ausgebildeten Lichteinkoppelbereichen 10 versehen. Jedem der vier Lichteinkoppelbereiche 10 ist je ein LED-Baustein 13 zugeordnet. Außerdem weist die Lichtleiteranordnung zwei stabförmig ausgebildete zweite Lichtleitkörper 9 auf, die im Bereich ihrer der elektrischen Leiterplatte 6 zugeordneten Unterseite jeweils vier Lichteinkoppelansätze 11 aufweisen. Jeder der beiden stabförmig ausgebildeten zweiten Lichtleitkörper 9 kommt mit seiner Unterseite bereichsweise auf zwei der dreieckförmig ausgebildeten Lichteinkoppelbereiche 10 des plattenförmig ausgebildeten ersten Lichtleitkörpers 8 zur Anlage. Jedem Lichteinkoppelansatz 11 der beiden zweiten Lichtleitkörper 9 ist je ein LED-Baustein 13 zugeordnet. Um Lichtstreuung möglichst zu verhindern, weisen sowohl der erste Lichtleitkörper 8, als auch die beiden zweiten Lichtleitkörper 9 bereichsweise Oberflächen auf, die Hochglanzpoliergüte aufweisen, so dass an diesen Oberflächen der Lichtleitkörper 8, 9 Totalreflektion auftritt. Zur Realisierung von Schaltfunktionen ist eine Domschaltmatte 12 vorgesehen, die mit ihrer Rückseite auf der elektrischen Leiterplatte 6 aufliegt. Die Domschaltmatte 12 ist dabei derart ausgeführt und angeordnet, dass der erste Lichtleitkörper 8 der Lichtleiteranordnung direkt auf der Vorderseite der Domschaltmatte 12 zur Anlage kommt. Um einen besonders kompakten Aufbau zu gewährleisten, sind die beiden an den ersten Lichtleitkörper 8 angeformten Lichteinkoppelbereiche 10 etwa nur halb so stark ausgeführt, wie die übrigen Bereiche des Lichtleitkörpers 8. Die beiden stabförmig ausgebildeten zweiten Lichtleitkörper 9 sind je einem Kantenbereich des Lichtleitkörpers 8 zugeordnet und kommen mit ihrer Unterseite jeweils bereichsweise auf zwei Lichteinkoppelbereiche 10 des ersten Lichtleitkörpers 8 zur Anlage. Die Lichtleiteranordnung besteht also aus einem ersten plattenförmig ausgebildeten Lichtleitkörper 8 und zwei stabförmig ausgebildeten zweiten Lichtleitkörpern 9. Die beiden zweiten Lichtleitkörper 9 sind dabei so angeordnet, dass der erste Lichtleitkörper 8 mit seinem ersten Lichtauskoppelbereich 14 zwischen ihnen angeordnet ist. Der erste Lichtauskoppelbereich 14 des ersten Lichtleitkörpers 8 ist flächig ausgeführt und mit einer Lichtauskoppelstruktur versehen. Die beiden zweiten Lichtleitkörper 9 der Lichtleiteranordnung weisen jeweils einen linienförmig ausgebildeten zweiten Lichtauskoppelbereich 15 auf, der jeweils ebenfalls mit einer Lichtauskoppelstruktur versehen ist.

Die mit ihrer Rückseite auf der elektrischen Leiterplatte 6 zur Anlage kommende Domschaltmatte 12 weist zwei seitlich angeordnete, je mit vier Domschaltelementen 16 versehene Schaltbereiche 17 auf. Zwischen den beiden Schaltbereichen 17 ist ein Reflektionsbereich 18 angeordnet, dessen Fläche größenordnungsmäßig im Wesentlichen der zur Auflage kommenden Fläche des ersten Lichtleitkörpers 8 entspricht. Die Domschaltmatte 12 weist zum Durchtritt von zwölf LED-Bausteinen 13 zwölf Ausnehmungen 19 auf, wobei zumindest einen Teil dieser Ausnehmungen Reflektionszonen zugeordnet sind, um das von den LED-Bausteinen abgestrahlte Licht bedarfsgerecht zu beeinflussen. Außerdem ist für einen weiteren LED-Baustein 20 eine weitere Ausnehmung 21 vorgesehen, welche im Reflektionsbereich 18 der Domschaltmatte 12 vorhanden ist. Der Lichtleitkörper 8 der Lichtleitanordnung weist in Zuordnung zudem ein Loch 22 zur Aufnahme dieses weiteren LED-Bausteines 20 auf. Die Innenwandungen dieses Loches 22 sind mit Lichtabschottungsmitteln versehen, damit das von dem weiteren LED-Baustein 20 abgegebene Licht nicht in den ersten Lichtleitkörper 18 eingestrahlt wird. Um das von den zwölf LED-Bausteinen 13 abgegebene Licht des weiteren bedarfsgerecht zu beeinflussen, sind die zwölf Ausnehmungen 19 der Domschaltmatte 12 so ausgeführt, dass ein unerwünschtes Überstrahlen bei der Lichtabgabe der zwölf LED-Bausteinen 13 möglichst verhindert wird. Zur optimierten Lichtausnutzung der LED-Bausteine 13 weist die Domschaltmatte 12, wie bereits erwähnt, den Reflektionsbereich 18 und mehrere Reflektionszonen auf. Weiterhin ist der Reflektionsbereich 18 auch dafür vorgesehen, um für eine besonders homogene Ausleuchtung des flächig ausgeführten ersten Lichtauskoppelbereiches 14 des ersten Lichtleiters 8 Sorge zu tragen. Um farbiges Licht abgeben zu können, sind die zwölf LED-Bausteine 13 und auch der weitere LED-Baustein 20 als Dreifarben-LED ausgeführt.

Wie des Weiteren insbesondere aus Figur 1 und Figur 2 hervorgeht, liegt auf der der elektrischen Leiterplatte 6 abgewandten Vorderseite der Domschaltmatte 12 eine Halteplatte 23 auf. Die Halteplatte 23 ist zum Verclipsen mit dem Sockelteil 2 vorgesehen, und weist an ihrer, der Domschaltmatte 12 abgewandten Seite acht erste Befestigungselemente 24 auf, um acht als Drucktasten ausgeführte Betätigungselemente 26 sicher, aber dennoch tastbeweglich, zu lagern. Außerdem sind an der Halteplatte 23 weitere Befestigungselemente 25 vorgesehen, die dazu dienen, eine sichere Befestigung einer, auf die Halteplatte 23 aufzusetzenden Designabdeckung 27 zu ermöglichen. Die Designabdeckung 27 ist transluzent ausgeführt, damit eine homogene Ausleuchtung über den ersten Lichtauskoppelbereich 14 des ersten Lichtleiters 8 sichergestellt ist. Durch das Verclipsen der Halteplatte 23 mit dem Sockelteil 2 entsteht, mit Zuordnung der Lichtleiteranordnung, der Domschaltmatte 12 und der elektrischen Leiterplatte 6 auf einfache Art und Weise ein separat zu handhabendes Gerätemodul, welches zu seiner Komplettierung nur noch mit den Betätigungselemente 26 und der Designabdeckung 27 bestückt werden muss.

### Bezugszeichenliste

- 1: Funktionsmodul
- 2: Sockelteil
- 3: Installationsdose
- 4: Abdeckrahmen
- 5: Tragring
- 6: Leiterplatte
- 7: Kragenförmiger Ansatz
- 8: Erster Lichtleitkörper
- 9: Zweiter Lichtleitkörper
- 10: Lichteinkoppelbereich
- 11: Lichteinkoppelansatz
- 12: Domschaltmatte
- 13: LED-Bausteine
- 14: Erster Lichtauskoppelbereich
- 15: Zweiter Lichtauskoppelbereich
- 16: Domschaltelement
- 17: Schaltbereich
- 18: Reflektionsbereich
- 19: Ausnehmungen
- 20: Weiterer LED-Baustein
- 21: Weitere Ausnehmung
- 22: Loch
- 23: Halteplatte
- 24: Erste Befestigungselemente
- 25: Zweite Befestigungselemente
- 26: Betätigungselement
- 27: Designabdeckung

## Patentansprüche

1. Elektrisches/elektronisches Installationsgerät für die Gebäudesystemtechnik mit einem mehrere Funktionselemente aufweisenden Funktionsmodul (1), welches unter Zwischenschaltung eines Abdeckrahmens (4) und eines Tragringes (5) zur Installation in eine Installationsdose (3) vorgesehen ist, wobei das Funktionsmodul (1) mit zumindest einer elektrischen Leiterplatte (6) versehen ist, die rückseitig, der Installationsdose (3) zugewandt, mehrere zur Verbindung mit Anschlusselementen vorgesehene Kontaktstifte sowie mehrere zur Funktion notwendige elektrische/elektronische Bauteile aufweist und die vorderseitig, dem Benutzer zugewandt, zumindest mit mehreren LED-Bausteinen (13) bestückt ist, wobei der elektrischen Leiterplatte (6) vorderseitig eine, aus zumindest zwei verschiedenartig ausgebildeten Lichtleitkörpern (8,9) bestehende Lichtleiteranordnung zugeordnet ist, in welche das von den LED-Bausteinen (13) abgegebene Licht eingekoppelt wird, wobei zumindest ein erster Lichtleitkörper (8) der Lichtleiteranordnung plattenförmig ausgebildet ist, welcher an zumindest einem seiner Kantenbereiche einstückig mit zumindest einem Lichteinkoppelbereich (10) versehen ist, und dass die Lichtleiteranordnung zumindest einen stabförmig ausgebildeten zweiten Lichtleitkörper (9) aufweist, der im Bereich seiner elektrischen Leiterplatte (6) zugeordneten Unterseite zumindest einen Lichteinkoppelansatz (11) aufweist, **dadurch gekennzeichnet, dass** zumindest ein, an den Kantenbereich des ersten Lichtleitkörpers (8) angeformter Lichteinkoppelbereich (10) in seiner Stärke etwa halb so stark ausgeführt ist wie die übrigen Bereiche des ersten Lichtleitkörpers (8), und dass zumindest ein Lichteinkoppelbereich (10) des ersten Lichtleitkörpers (8) im Wesentlichen dreieckförmig ausgebildet ist, und dass der stabförmig ausgebildete zweite Lichtleitkörper (9) mit seiner Unterseite zumindest bereichsweise auf einem der Lichteinkoppelbereiche (10) des plattenförmig ausgebildeten ersten Lichtleitkörpers (8) zur Anlage kommt, und dass zumindest ein Lichtleitkörper (8, 9) der Lichtleiteranordnung rückseitig zumindest bereichsweise auf einer Domschaltmatte (12) zur Anlage kommt, die mit ihrer Rückseite auf der elektrischen Leiterplatte (6) aufliegt.

2. Elektrisches/elektronisches Installationsgerät nach Anspruch 1, **dadurch gekennzeichnet, dass** ein erster Lichtauskoppelbereich (14) des ersten Lichtleitkörpers (8) flächig ausgeführt und mit einer Lichtauskoppelstruktur versehen ist.

3. Elektrisches/elektronisches Installationsgerät nach einem der Ansprüche 1 bis 2, **dadurch gekennzeichnet, dass** der zweite Lichtleitkörper (9) der Lichtleiteranordnung einen linienförmigen zweiten Lichtauskoppelbereich (15) aufweist, der mit einer Lichtauskoppelstruktur versehen ist.

4. Elektrisches/elektronisches Installationsgerät nach einem der Ansprüche 1 bis 3, **dadurch gekennzeichnet, dass** die Lichtleiteranordnung aus einem ersten plattenförmig ausgebildeten Lichtleitkörper (8) und zwei zweiten, stabförmig ausgebildeten Lichtleitkörpern (9) besteht.

5. Elektrisches/elektronisches Installationsgerät nach einem der Ansprüche 1 bis 4, **dadurch gekennzeichnet, dass** die mit ihrer Rückseite auf der elektrischen Leiterplatte (6) zur Anlage kommende Domschaltmatte (12) zwei seitlich angeordnete, je mit mehreren Domschaltelementen (16) versehene Schaltbereiche (17) aufweist, und dass zwischen den beiden Schaltbereichen (17) ein Reflektionsbereich (18) angeordnet ist.

6. Elektrisches/elektronisches Installationsgerät nach einem der Ansprüche 1 bis 5, **dadurch gekennzeichnet, dass** die Domschaltmatte (12) zumindest eine, zum Durchtritt zumindest eines LED-Bausteines (13) und/oder eines weiteren LED-Bausteines (20) vorgesehene Ausnehmung (19, 21) aufweist.

7. Elektrisches/elektronisches Installationsgerät nach einem der Ansprüche 1 bis 6, **dadurch gekennzeichnet, dass** zumindest ein Lichtleitkörper (8, 9) der Lichtleitanordnung mit zumindest einem Loch (22) zur Aufnahme zumindest eines weiteren LED-Bausteines (20) versehen ist.

8. Elektrisches/elektronisches Installationsgerät nach Anspruch 7, **dadurch gekennzeichnet, dass** die Innenwandungen des Loches (22) mit Lichtabschottungsmitteln versehen sind.

9. Elektrisches/elektronisches Installationsgerät nach einem der Ansprüche 1 bis 8, **dadurch gekennzeichnet, dass** auf der, der elektrischen Leiterplatte (6) abgewandten Vorderseite der Domschaltmatte (12) eine Halteplatte (23) aufliegt, die am Sockelteil (2) festgelegt ist und die an ihrer der Domschaltmatte (12) abgewandten Seite mit zumindest einem Betätigungselement (26) und/oder zumindest einer Designabdeckung (27) bestückt ist.

10. Elektrisches/elektronisches Installationsgerät nach Anspruch 9, **dadurch gekennzeichnet, dass** die Designabdeckung (27) zumindest bereichsweise transluzent ausgeführt ist.

11. Elektrisches/elektronisches Installationsgerät nach Anspruch 9 oder 10, **dadurch gekennzeichnet, dass** die Designabdeckung (27) als Kennzeichnungsschild ausgeführt ist.

12. Elektrisches/elektronisches Installationsgerät nach einem der Ansprüche 9 bis 11, **dadurch gekennzeichnet, dass** zumindest ein Betätigungselement (26) als Drucktaste ausgeführt ist.

## Claims

1. Electric/electronic installation device for building automation with a functional module (1) featuring several functional elements, which, by interposition of a cover frame (4) and a bearing ring (5) is provided for installation in an installation socket (3), wherein the functional module (1) is provided with at least one electrical printed circuit board (6) which on the back side, facing the installation socket (3), features several contact pins for the connection with connection elements as well as several electrical/electronic modules necessary for the function, and which on the front side, facing the user, is equipped with at least several LED modules (13), wherein a light conductor unit consisting of at least two different light conductors (8, 9) is assigned to the electric printed circuit board (6) at the front side, in which the light emitted by the LED modules (13) is coupled in, wherein at least one first light conductor (8) of the light conductor unit is plate-shaped, which at at least one of its edges is provided in one piece with a light input area (10), and that the light conductor unit features at least one bar-shaped second light conductor (9) which at its bottom side facing the electric printed circuit board (6) features at least one light input unit (11), **characterized by the fact** that at least one light input area (10) moulded on to the edge of the first light conductor (8) is half the thickness of the other areas of the first light conductor (8), and that at least one light input area (10) of the first light conductor (8) in general is triangle-shaped, und that the bar-shaped second light conductor (9) with its bottom side is placed at least partly on one of the light input areas (10) of the plate-shaped first light conductor (8), and that at least one light conductor (8, 9) of the light conductor unit is placed by its back at least partly on a dome switch mat (12) which with its back rests on the electric printed circuit board (6).

2. Electric/electronic installation device in accordance with Claim 1, **characterized by the fact** that a first light output area (14) of the first light conductor (8) is plane-shaped and provided with a light output structure.

3. Electric/electronic installation device in accordance with any of Claims 1 to 2, **characterized by the fact** that the second light conductor (9) of the light conductor unit features a line-shaped second light output area (15) which is provided with a light output structure.

4. Electric/electronic installation device in accordance with any of Claims 1 to 3, **characterized by the fact** that the light conductor unit consists of a first plate-shaped light conductor (8) and two second bar-shaped light conductors (9).

5. Electric/electronic installation device in accordance with any of Claims 1 to 4, **characterized by the fact** that the dome switch mat (12), which rests on the electric printed circuit board (6) by its back, features two lateral switching areas (17), each equipped with several dome switch elements (16), and that between the two switching areas (17) a reflection area (18) is provided.

6. Electric/electronic installation device in accordance with any of Claims 1 to 5, **characterized by the fact** that the dome switch mat (12) features at least one recess (19, 21) to feed through at least one LED module (13) and/or a further LED module (20).

7. Electric/electronic installation device in accordance with any of Claims 1 to 6, **characterized by the fact** that at least one light conductor (8, 9) of the light conductor unit is provided with at least one hole (22) to take up at least one further LED module (20).

8. Electric/electronic installation device in accordance with Claim 7, **characterized by the fact** that the inner walls of the hole (22) are provided with light sealing means.

9. Electric/electronic installation device in accordance with any of Claims 1 to 8, **characterized by the fact** that a bearing plate (23) rests on the front side of the dome switch mat (12) facing away from the electric circuit board (6), which is fixed at the base part (2) and which at its side facing away from the dome switch mat (12) is equipped with at least one operating element (26) and/or at least one design cover (27).

10. Electric/electronic installation device in accordance with Claim 9, **characterized by the fact** that the design cover (27) at least partly is translucent.

11. Electric/electronic installation device in accordance with any of Claims 9 or 10, **characterized by the fact** that the design cover (27) is designed as label.

12. Electric/electronic installation device in accordance with any of Claims 9 to 11, **characterized by the fact** that at least one operating element (26) is designed as push-button.

## Revendications

1. Appareil d'installation électrique/électronique pour la domotique avec un module fonctionnel (1), présentant plusieurs éléments fonctionnels, qui est prévu pour une installation dans un boîtier d'installation (3) pour intercaler un cadre de recouvrement (4) et un anneau porteur (5), ce faisant le module fonctionnel (1) est doté d'au moins un circuit imprimé (5) électrique dont la face arrière tournée vers le boîtier d'installation (3) présente plusieurs broches de contact prévues pour la connexion à des éléments connecteurs ainsi que plusieurs composants électriques/électroniques nécessaires au fonctionnement et dont la face avant tournée vers l'utilisateur est équipée d'au moins plusieurs modules (13) DEL, ce faisant à la face avant du circuit imprimé (6) électrique est affectée un arrangement de guides optiques consistant en au moins deux corps de guides optiques (8, 9) différents, dans lesquels la lumière émise par les modules DEL (13) est couplée, ce faisant au moins un premier corps de guides optiques (8) de l'arrangement de guides optiques est configuré en forme de plaque qui est doté d'au moins une zone de couplage de lumière (10) sur au moins l'une de ses zones de bordure en une pièce et que l'arrangement de guides optiques présente au moins un deuxième corps de guides optiques (9) configuré en forme de barre qui présente au moins un insert de couplage de lumière (11) dans la zone de la face inférieure affectée à son circuit imprimé (6) électrique **caractérisé en ce qu'**au moins une zone de couplage de lumière (10) moulée sur la zone de bordure du premier corps de guides optiques (8) a une intensité à moitié aussi forte que les autres zones du premier corps de guides optiques (8) et qu'au moins une zone de couplage de lumière (10) du premier corps de guides optiques (8) est essentiellement de forme triangulaire et que la face inférieure du second corps de guides optiques (9) configuré en forme de barre est du moins partiellement en contact sur l'une des zones de couplage de lumière (10) du premier corps de guides optiques (8) configuré en forme de plaque et qu'au moins un corps de plaques optiques (8, 9) de l'arrangement de guides optiques, sur la face arrière, est en contact, au moins partiellement, avec un tapis sensible en dôme (12) dont la face arrière repose sur le circuit imprimé (6) électrique.

2. Appareil d'installation électrique/électronique selon la revendication 1 **caractérisé en ce qu'**une première zone de couplage d'éclairage (14) du premier corps de guides optiques (8) est d'exécution plate et dotée d'une structure de découplage.

3. Appareil d'installation électrique/électronique selon la revendication 1 à 2 **caractérisé en ce que** le second corps de guides optiques (9) de l'arrangement de guides optiques présente une seconde zone de découplage de lumière (15) linéaire qui est dotée d'une structure de découplage de lumière.

4. Appareil d'installation électrique/électronique selon la revendication 1 à 3 **caractérisé en ce que** l'arrangement de guides optiques consiste en un premier corps de guides optiques (8) configuré en forme de plaque et de deux seconds corps de guides optiques (9) configuré en forme de plaque.

5. Appareil d'installation électrique/électronique selon la revendication 1 à 4 **caractérisé en ce que** le tapis sensible en dôme (12) en contact avec la face arrière sur le circuit imprimé (6) électrique présente deux zones de commutation (17) latéraux chacune dotée de plusieurs éléments de commutation en dôme (16) et qu'une zone de réflexion (18) est disposée entre les deux zones de commutation (17).

6. Appareil d'installation électrique/électronique selon la revendication 1 à 5 **caractérisé en ce que** le tapis sensible en dôme (12) présente au moins un évidement (19, 21) prévu pour le passage d'au moins un module DEL (13) et/ou un autre module DEL (20).

7. Appareil d'installation électrique/électronique selon la revendication 1 à 6 **caractérisé en ce qu'**au moins un corps de guides optiques (8, 9) de l'arrangement de guides optiques est doté d'au moins un trou (22) destiné à recevoir au moins un autre module DEL (20).

8. Appareil d'installation électrique/électronique selon la revendication 7 **caractérisé en ce que** les parois intérieures du trou (22) sont dotées de moyens de cloisonnement de lumière.

9. Appareil d'installation électrique/électronique selon l'une des revendications 1 à 8 **caractérisé en ce que** sur la face avant du tapis sensible en dôme (12) opposée au circuit imprimé (6) électrique repose une plaque de retenue (23) qui est fixée sur la partie de socle (2) et sa face opposée au tapis sensible en dôme (12) est dotée d'au moins un élément d'actionnement (26) et/ou au moins un recouvrement stylisé (27).

10. Appareil d'installation électrique/électronique selon la revendication 9 **caractérisé en ce que** le recouvrement stylisé (27) est d'exécution translucide, du moins partiellement.

11. Appareil d'installation électrique/électronique selon les revendications 9 ou 10 **caractérisé en ce que** le recouvrement stylisé (27) est exécuté comme une plaque signalétique.

12. Appareil d'installation électrique/électronique selon les revendications 9 à 11 **caractérisé en ce qu'**au moins un élément d'actionnement (26) est exécuté comme un bouton-poussoir.
